# EUROPÄISCHE PATENTSCHRIFT

(11) **EP 2 464 887 B1**
(45) Veröffentlichungstag und Bekanntmachung des Hinweises auf die Patenterteilung: **11.06.2014**
(21) Anmeldenummer: 10744688.2
(22) Anmeldetag: 11.08.2010
(51) Int. Cl.: F16D 57/04

(54) **VERFAHREN ZUM STEUERN DER LEISTUNGSÜBERTRAGUNG EINES HYDRODYNAMISCHEN RETARDERS**
METHOD FOR CONTROLLING THE POWER TRANSMISSION OF A HYDRODYNAMIC RETARDER
PROCÉDÉ DE COMMANDE DE LA TRANSMISSION DE PUISSANCE D'UN RALENTISSEUR HYDRODYNAMIQUE

(30) Priorität: 13.08.2009 DE 102009037057
(43) Veröffentlichungstag der Anmeldung: 20.06.2012
(73) Patentinhaber: Voith Patent GmbH, 89522 Heidenheim (DE)
(72) Erfinder: LAUKEMANN, Dieter, 74564 Crailsheim (DE)
(74) Vertreter: Schmidt, Sven Hendrik
(86) Internationale Anmeldenummer: PCT/EP2010/004886
(87) Internationale Veröffentlichungsnummer: WO 2011/018209

(56) Entgegenhaltungen:
- EP-A1- 1 176 073
- EP-A1- 2 085 661
- EP-A2- 0 873 925
- EP-A2- 1 308 359
- WO-A1-2004/088104
- DE-A1- 4 408 349
- DE-A1- 10 009 959
- DE-A1- 19 716 919
- DE-A1-102004 048 120
- DE-B3-102006 036 185
- DE-C1- 19 853 830

## Beschreibung

Die vorliegende Erfindung betrifft ein Verfahren zum Steuern der Leistungsübertragung eines in einem Fahrzeugkühlkreislauf, in dem ein Kühlmedium zum Kühlen eines Antriebsmotors und/oder von anderen Aggregaten umgewälzt wird, angeordneten hydrodynamischen Retarders.

Hydrodynamische Retarder weisen einen Arbeitsraum auf, der mit einem Arbeitsmedium befüllbar ist, um Drehmoment von einem angetriebenen Primärschaufelrad (Rotor) auf ein stationäres Sekundärschaufelrad, deshalb auch Stator genannt, hydrodynamisch zu übertragen. Anstelle eines stationären Sekundärschaufelrades kann auch ein entgegen dem Drehsinn des Primärschaufelrades umlaufendes Sekundärschaufelrad vorgesehen sein, um einen Gegenlaufretarder auszubilden. Dabei wird das Primärschaufelrad verzögert und insbesondere eine mit dem Primärschaufelrad drehfest ausgeführte Welle, beispielsweise eine indirekt mit den Antriebsrädern des Fahrzeugs verbundene Antriebswelle (Gelenkwelle) oder Getriebeabtriebswelle, verzögert.

Dem hydrodynamischen Retarder ist dabei meist eine Kennlinie unter Umständen auch ein bestimmtes Kennfeld zugeordnet, welches in Abhängigkeit des Fahrerwunsches nach einer bestimmten Verzögerung oder Erzeugung einer bestimmten Bremsleistung jedem Betriebspunkt auf dieser Kennlinie oder in diesem Kennfeld einen entsprechenden Steuerdruck als Stellgröße zuordnet. Der Fahrer wählt hierbei mittels eines Wählhebels eine bestimmte Bremsstufe aus, die ein einzustellendes Retarderbremsmoment darstellt. Bei aktiviertem Retarder und Anforderung des Bremswunsches wird aus der Kennlinie oder dem Kennfeld der entsprechende Steuerdruck in Abhängigkeit eines oder mehrerer weiterer Parameter ermittelt und eingestellt, so dass sich ein bestimmter Füllungsgrad an Arbeitsmedium im Arbeitsraum einstellt, wodurch sich zwischen drehangetriebenem Primärschaufelrad und Sekundärschaufelrad ein hydrodynamischer Kreislauf ausbildet. Hierdurch wird das Primärschaufelrad, welches zum Beispiel indirekt mit den Antriebsrädern oder dem Antriebsmotor verbunden ist verzögert und diese/dieser mit dem eingestellten Retarderbremsmoment abgebremst.

Das Dokument WO 2006/037465 A1 beschreibt ein derartiges Verfahren. Der hydrodynamische Retarder umfasst ein Kennfeld, in dem als Paramter der Steuerdruck in Abhängigkeit des einzustellenden Retarderbremsmomentes und die Drehzahl des Primärschaufelrades hinterlegt sind. Das Dokument schlägt zusätzlich vor, im Kennfeld die Temperatur des Retarders zu hinterlegen und somit ein mehrdimensionales Kennfeld zu erhalten.

Das Dokument EP 1 334 016 B1 beschreibt ein Verfahren zur Erhöhung der Bremswirkung eines hydrodynamischen Retarders bei bestimmten Betriebsbedingungen eines mit dem hydrodynamischen Retarder gekoppelten Getriebes. Dabei wird immer dann, wenn eine erhöhte Bremsleistung des Retarders benötigt wird, die Schaltstufe des Getriebes erniedrigt, so dass hierdurch die Drehzahl einer Abtriebswelle, welche mit einem Primärschaufelrad des Retarders gekoppelt ist, erhöht wird. Durch die höhere Drehzahl des Primärschaufelrades wird eine erhöhte Bremsleistung erzielt. Hierzu schlägt das Dokument vor, zu überprüfen, ob eine Rückschaltung in einem bestimmten Betriebszustand des Fahrzeugs (zum Beispiel die aktuelle Leistungsfähigkeit des Fahrzeugkühlsystems) beziehungsweise hydrodynamischen Retarders überhaupt notwendig ist. Die Leistungsfähigkeit des Fahrzeugkühlsystems beschreibt das zum aktuellen Betriebszustand benötigte Vermögen des Kühlmediums, Wärme, die durch den Betrieb des Retarders in das Kühlmedium eingebracht wurde, aus dem Kühlmedium herauszubringen. Beispielsweise kann die Leistungsfähigkeit erhöht werden, indem die Drehzahl einer im Kühlkreislauf angeordneten Wasserpumpe oder der Druck des Kühlmediums erhöht wird. In anderen Worten wird überprüft, ob genügend Wärme über das Kühlmedium abgeführt werden kann, ohne dass eine Rückschaltung erfolgt. Somit wird vor einer Rückschaltanforderung eine Vielzahl von die Kühlleistung beeinflussenden Parametern wie die Getriebeabtriebsdrehzahl, die Kupplungsdrehzahl, die Gangstellung des Getriebes, das aktuelle Bremsmoment sowie der Einlass- oder Auslassdruck des Retarders beziehungsweise der Steuerstrom, das heißt der Strom, der zum Einstellen eines Retarderbremsmomentes nötig ist, berücksichtigt.

Ferner sind Lösungsansätze bekannt, um eine Überhitzung des Fahrzeugkühlkreislaufes durch Einbringen von Wärme aus dem Retarder zu verhindern, welche eine Abregelung des Retarderbremsmomentes unabhängig von einer Vorgabe des Fahrerwunsches vorsehen, nämlich immer dann, wenn das Fahrzeugkühlsystem, insbesondere aufgrund einer zu geringen Drehzahl der Wasserpumpe nicht die erforderliche Wärmekapazität zur Verfügung stellt. Um die Notwendigkeit einer solchen Abregelung zu erkennen, können verschiedene Parameter, insbesondere die Motordrehzahl des die Wasserpumpe antreibenden Motors oder die Wasserpumpendrehzahl oder Druckzustände, Druckgradienten, Temperaturen oder Temperaturgradienten im Kühlsystem herangezogen werden.

DE 197 16 919 A1 beschreibt ein Verfahren zur maximalen Ausnutzung der Bremswirkung eines Retarders, wobei Wärme mit Hilfe eines Kühlmediums eines Kühlsystems abgeführt wird. Dabei wird die Kühlleistung des Kühlkreislaufes bestimmt und die Bremsleistung des Retarders in Abhängigkeit der Kühlleistung des Kühlsystems eingestellt.

DE 198 53 830 C1 beschreibt eine Bremsanlage mit einem hydrodynamischen Retarder, wobei zur optimalen Wärmeabfuhr das gesamte, im Vorratsbehälter enthaltene Arbeitsmedium des Kühlkreislaufes in den Kreislauf eingebracht wird und das einzustellende Retarderbremsmoment in Abhängigkeit der Primärschaufelraddrehzahl durch Erzeugen des zugeordneten Steuerdruckes eingestellt wird.

DE 10 2006 036185 B3 beschreibt ein Verfahren zum Begrenzen der maximal abrufbaren Bremsleistung eines hydrodynamischen Retarders, wobei die Temperatur des Kühlmittels erfasst wird und die maximal abrufbare Bremsleistung in Abhängigkeit einer Regeleingriffs- und einer Regelziel-Temperatur sowie der Drehzahl des Fahrzeugantriebsmotors eingestellt wird.

Schließlich beschreibt die EP 1 308 359 A2 ebenfalls ein Verfahren zum Begrenzen der Bremsleistung eines Retarders, wobei die Regelung einer konstanten Temperatur der Bremsleistung in Abhängigkeit der Temperatur des Kühlmittels sowie einer vorgegebenen Zeitdauer verändert wird.

Obwohl somit verschiedenste Größen bei der Einstellung eines vorgegebenen Retarderbremsmomentes bereits herangezogen werden, sind die bisherigen Systeme nicht dazu ausgelegt, mit dem Retarder ein exakt reproduzierbares Moment in Abhängigkeit eines Fahrerwunsches, insbesondere einer vorgegebenen Bremsstufe, zu erzeugen, sondern je nach Betriebszustand des Fahrzeugs beziehungsweise des Fahrzeugkühlsystems ergibt sich bei einer bestimmten Bremsstufe mal ein größeres und mal ein geringeres Retarderbremsmoment. Selbstverständlich ist es möglich, diesen Nachteil dadurch zu umgehen, dass eine Regelung mit geschlossenem Regelkreis vorgesehen wird, jedoch führt dies zu einem aparativen Mehraufwand sowie zu einer verzögerten Einstellung des Sollbremsmomentes, da sich der Regelkreis bei jedem Bremsvorgang zunächst einregeln muss.

Der Erfindung liegt die Aufgabe zugrunde, ein Verfahren zum Steuern der Leistungsübertragung eines hydrodynamischen Retarders anzugeben, welches die Nachteile gemäß dem Stand der Technik vermeidet. Insbesondere soll das Verfahren eine exakte Steuerung der Leistungsübertragung und damit des Bremsmomentes in allen Betriebspunkten des hydrodynamischen Retarders ermöglichen.

Die Aufgabe wird durch den unabhängigen Anspruch gelöst. Die abhängigen Ansprüche stellen besonders günstige Ausführungsformen der Erfindung dar.

Bei einem erfindungsgemäßen Verfahren zum Steuern der Leistungsübertragung eines in einem Fahrzeugkühlreislauf, in dem ein Kühlmedium zum Kühlen eines Antriebsmotors und/oder von anderen Aggregaten umgewälzt wird, angeordneten hydrodynamischen Retarders, umfassend ein angetriebenes Primärschaufelrad und ein Sekundärschaufelrad, die miteinander einen torusförmigen, wahlweise mit Arbeitsmedium befüllbaren und entleerbaren Arbeitsraum ausbilden, um Drehmoment hydrodynamisch vom Primärschaufelrad auf das Sekundärschaufelrad zu übertragen, wobei das Kühlmedium des Fahrzeugkühlkreislaufs zugleich das Arbeitsmedium des hydrodynamischen Retarders ist, ist für den hydrodynamischen Retarder ein Kennfeld hinterlegt, das der aktuell vorliegenden Primärschaufelraddrehzahl und einem, wenigstens eine Bremsstufe darstellenden, einzustellenden Retarderbremsmoment einen Steuerdruck zum Einstellen eines Füllungsgrades im Arbeitsraum zuordnet. Erfindungsgemäß wird das einzustellende Retarderbremsmoment in Abhängigkeit der Primärschaufelraddrehzahl durch Erzeugen des zugeordneten Steuerdruckes eingestellt. Dabei wird zum Einstellen des Steuerdruckes zusätzlich die aktuelle hydraulische Leistung des Kühlmediums an wenigstens einer Stelle im Fahrzeugkühlkreislauf direkt erfasst, oder die hydraulische Leistung mittels einer oder mehrerer der nachfolgenden Größen indirekt erfasst:
- der Drehzahl, der Förder- oder Antriebsleistung, dem Fördervolumenstrom, oder dem Druck auf einer Saug- oder Druckseite einer im Fahrzeugkühlkreislauf angeordneten Kühlmediumpumpe, mittels der das Kühlmedium umgewälzt wird.
- der aktuellen Drehzahl eines die Kühlmediumpumpe antreibenden Antriebsmotors und/oder bei Vorsehen eines der Kühlmediumpumpe vorgeschalteten Getriebes, der aktuellen Drehzahl des Antriebsmotors zusammen mit der aktuellen Übersetzungsstufe des Getriebes;
- dem aktuellen Kühlmediumdruck im Fahrzeugkühlkreislauf, der Schaltstellung wenigstens eines Ventils, eines Thermostats oder sonstiger hydraulischer Einbauten;
- wobei die hydraulische Leistung oder die Größe zur indirekten Erfassung der hydraulischen Leistung zusätzlich im Kennfeld hinterlegt ist.

Vorliegend ist die aktuelle hydraulische Leistung des Kühlmediums insbesondere als das Produkt des Druckes und des Volumenstromes des Kühlmediums an einer vorgegebenen Stelle im Fahrzeugkühlkreislauf definiert.

Insbesondere wird die Steuerung des Steuerdruckes mittels des erfindungsgemäßen Kennfelds im gesamten Betriebsbereich des Retarders durchgeführt. Das bedeutet, dass der Steuerdruck im Bremsbetrieb mit dem hydrodynamischen Retarder stets während des Betriebes des Retarders mit dem erfindungsgemäßen Kennfeld variiert wird. Hierdurch wird die exakte Einstellung des Steuerdruckes unabhängig von vorherrschenden Randbedingungen wie zum Beispiel einer Rückschaltanforderung eines Getriebes realisiert. Natürlich kann, wie beim Stand der Technik, zusätzlich eine Abregelung des Momentes beziehungsweise des Füllungsgrades zur Vermeidung einer Überhitzung vorgesehen sein.

Dabei dient das der Kühlmediumpumpe vorgeschaltete Getriebe beispielsweise zur Realisierung eines Übersetzungsverhältnisses, zum Beispiel einer Übersetzung ins Schnelle, so dass bei niedriger Motorendrehzahl eine höhere Drehzahl eines Pumpenrades der Kühlmediumpumpe und somit ein höherer Kühlmediumvolumenstrom erreicht wird. Umfasst das besagte Getriebe mehrere Schaltstufen beziehungsweise ist die Kühlmediumpumpendrehzahl regelbar, so kann die aktuelle Drehzahl der Kühlmediumpumpe auch über die aktuelle Drehzahl des Antriebsmotors, welches die Kühlmediumpumpe über das Getriebe antreibt sowie die aktuell eingelegte Gangstufe oder das aktuelle

Übersetzungsverhältnis indirekt bestimmt werden. Dabei kann der Antriebsmotor der Kühlmediumpumpe zugleich auch der Antriebsmotor des Fahrzeugs sein. Somit kann anstelle der Hinterlegung der hydraulischen Leistung im Kennfeld die indirekt erfasste Größe, das heißt die Kühlmediumpumpendrehzahl, die Motordrehzahl mit der zugehörigen Übersetzungsstufe des Getriebes, die Antriebsmotordrehzahl selbst oder wenigstens eine der verbleibenden oben genannten Größen - auch in Kombination miteinander - als weiterer Parameter zum Retarderbremsmoment und zur Primärschaufelraddrehzahl im Kennfeld hinterlegt sein. Die oben beschriebenen Größen können beispielsweise mittels geeigneten Sensoren erfasst und zur Auswertung an eine Steuereinrichtung weitergeleitet werden.

Neben den Ventilen und Thermostaten zählen zum Beispiel auch verstellbare Drosseln oder justierbare Blenden zu den hydraulischen Einbauten, die in Abhängigkeit des einstellbaren oder eingestellten Strömungsquerschnitts für Kühlmedium im Fahrzeugkühlkreislauf mehr oder weniger Kühlmedium hindurchströmen lassen. Ventile, Thermostate und hydraulische Einbauten beeinflussen somit den Druck und Volumenstrom des Kühlmediums, das durch sie hindurchströmt und damit auch die hydraulische Leistung des Kühlmediums selbst. Somit kann durch Erfassen der Schaltstellung(en) (zum Beispiel des wenigstens einen Thermostats) insbesondere aller hydraulischer Einbauten mit veränderlichem Strömungsquerschnitt indirekt auf die hydraulische Leistung des Kühlmediums in dem Fahrzeugkühlkreislauf in jedem Betriebspunkt geschlossen werden. Somit können die Schaltstellungen (zum Beispiel von Thermostaten) oder Schaltwege - zum Beispiel von Proportionalventilen - direkt als Größe zusätzlich zum Retarderbremsmoment und der Primärschaufelraddrehzahl im Kennfeld des hydrodynamischen Retarders hinterlegt sein, ohne dass die eigentliche hydraulische Leistung berechnet wird. Diese Schaltstellungen können über entsprechende Sensoren, zum Beispiel Wegaufnehmer, erfasst oder durch Aussteuerbefehle erkannt und an die Retarder-Steuereinrichtung weitergeleitet werden.

Bevorzugt wird der Kühlmediumdruck indirekt aus der Kühlmediumtemperatur bestimmt. Hierdurch kann zum Beispiel auf einen Drucksensor, welcher den Kühlmediumdruck erfasst, verzichtet werden.

Die Erfindung soll nun anhand der einzigen Figur erläutert werden.

Es zeigt:

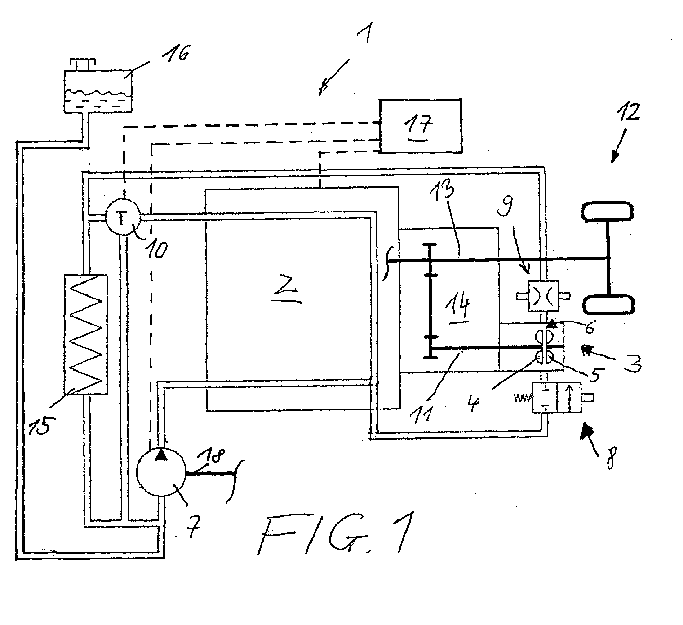

- Figur 1: einen erfindungsgemäßen Fahrzeugkühlkreislauf 1 mit einem hydrodynamischen Retarder 3.

Der hydrodynamische Retarder 3 in Figur 1 umfasst ein Primärschaufelrad 4 und ein Sekundärschaufelrad 5, welche einen mit Arbeitsmedium befüllbaren Arbeitsraum 6 zum Einstellen eines Füllungsgrades ausbilden. Der Arbeitsraum 6 ist hier strömungsleitend mit dem Fahrzeugkühlkreislauf 1 verbunden, so dass das Kühlmedium des Fahrzeugkühlkreislaufs 1, insbesondere Wasser oder ein Wassergemisch, zugleich das Arbeitsmedium des hydrodynamischen Retarders 3 ist.

Im vorliegenden Falle ist der hydrodynamische Retarder 3 als Sekundärwasserretarder ausgeführt, das heißt, dass dieser (indirekt) Antriebsräder 12 des Fahrzeugs verzögert. Hierzu ist das Primärschaufelrad 4 vorliegend drehfest mit einer Getriebeabtriebswelle 11 eines Nebenabtriebs eines Getriebes 14, umfassend eine Antriebswelle 13 (zum Beispiel Gelenkwelle), die Leistung vom Antriebsmotor 2 auf die Antriebsräder 12 überträgt, gekoppelt. Wird nun der hydrodynamische Retarder 3 betätigt, so strömt Kühlmedium in den Arbeitsraum 6, wodurch das Primärschaufelrad 4 hydrodynamisch verzögert wird und die Antriebsräder 12 bremst. Natürlich wäre es denkbar, den hydrodynamischen Retarder als Primärwasserretarder auszuführen, wobei dieser dann direkt die Antriebswelle des Antriebsmotors 2 verzögern würde. Auch wäre es denkbar, den Sekundärwasserretarder an einer anderen Stelle, beispielsweise zwischen dem Getriebe 14 und den Antriebsrädern 12, insbesondere in Leistungsübertragungsrichtung gesehen hinter dem Getriebe 14, anzuordnen.

In Strömungsrichtung hinter dem Retarder 3 sind vorliegend folgende Komponenten im Fahrzeugkühlkreislauf 1 angeordnet: ein Ventil 9, ein Wärmetauscher 15, die Einmündung eines Ausgleichsbehälters 16, eine Kühlmediumpumpe 7 sowie ein weiteres Ventil 8. In Strömungsrichtung im Fahrzeugkühlkreislauf 1 parallel zum hydrodynamischen Retarder 3 wird der Antriebsmotor 2 mit Kühlmedium gekühlt. Ferner könnten die beiden Ventile 8 und 9 zu einem gemeinsamen Ventil (Kombiventil) zusammengefasst sein.

Zum Einstellen eines vorbestimmten Arbeitsmediumdruckes im Arbeitsraum 6 des hydrodynamischen Retarders 3 wird wenigstens eines der Ventile 8, 9 mittels eines Steuerdrucks beaufschlagt, um über diese Druckeinstellung den Füllungsgrad des Arbeitsraumes 6 mit Arbeitsmedium zu variieren. Je höher dabei der eingestellte Druck im Arbeitsraum 6 ist, desto mehr Bremsmoment wird durch den Retarder 3 zur Verfügung gestellt. Zum Einstellen des Steuerdruckes kann ein Steuerdruckventil (nicht gezeigt) vorgesehen sein, welches die beiden Ventile 8, 9 druckbeaufschlagt. Vorzugsweise ist das Steuerdruckventil ein pneumatisches Ventil.

Durch Betätigen eines Bremspedals oder eines sonstigen Aktuators, beispielsweise eines Wählhebels (nicht dargestellt) oder durch eine automatische Steuereinrichtung, zum Beispiel Geschwindigkeits- oder Abstandsregelung, wird ein Bremsvorgang eingeleitet, wobei der Strömungsquerschnitt des Steuerdruckventils vergrößert wird, so dass Druckluft zum Beispiel aus einem Druckluftsystem des Fahrzeugs, das wenigstens eine Ventil 8, 9 mit zunehmendem Steuerdruck beaufschlagt, so dass zunehmend Arbeitsmedium aus dem Fahrzeugkühlkreislauf 1 in den Retarder 3 beziehungsweise des Arbeitsraumes 6 gelangt. Dabei werden das Primärschaufelrad 4, mit diesem die Nebenabtriebswelle 11, die Antriebswelle 13 und schließlich die Antriebsräder 12 durch Ausbilden eines hydrodynamischen Kreislaufes im Arbeitsraum 6 zwischen dem Primärschaufelrad 4 und dem Sekundärschaufelrad 5 verzögert.

Zur exakten Einstellung des Steuerdruckes wird in Abhängigkeit der aktuellen Primärschaufelraddrehzahl, also zum Beispiel der Drehzahl der Antriebswelle 13 beziehungsweise der Antriebsräder 12 und dem einzustellenden Retarderbremsmoment - welches beispielsweise als Bremsstufe am Wählhebel eingestellt wurde - der in diesem Betriebspunkt des Fahrzeugs/Retarders hinterlegte Steuerdruck aus einem Kennfeld entnommen und eingestellt. Das Kennfeld kann dabei in einer Steuereinrichtung 17 hinterlegt sein, welche auch für die Ermittlung und Einstellung des Steuerdruckes zuständig sein kann.

Beispielsweise können Sensoren an hydraulischen Einbauten, wie beispielsweise dem Thermostat 10 vorgesehen sein, welche die aktuelle Schaltstellung aufnehmen. Diese Signale werden dann über Leitungen (hier gestrichelt dargestellt) an die Steuereinrichtung 17 übertragen.

Zusätzlich dazu oder alternativ wird beispielsweise die aktuelle Drehzahl der Kühlmediumpumpe (Pumpenraddrehzahl) oder einer damit verbundenen Antriebswelle 18 und hierdurch indirekt der Kühlmediumdruck im Fahrzeugkühlkreislauf 1 ermittelt. Dabei kann die Kühlmediumpumpe 7 mittels des Antriebsmotors 2 des Fahrzeugs direkt - zum Beispiel über einen Nebenabtrieb-oder indirekt über ein zwischengeschaltetes Getriebe oder eine Schlupfkupplung angetrieben werden. Auch andere, insbesondere vom Antriebsmotor 2 unabhängige Antriebe, wie ein Elektromotor, sind denkbar, um die Kühlmediumpumpe 7 insbesondere drehzahlunabhängig vom Antriebsmotor 2 anzutreiben. In einem solchen Fall kann zum Beispiel die Antriebsdrehzahl des Antriebsmotors an die Steuereinrichtung 17 übertragen werden. Ist, wie in diesem Fall der Antriebsmotor der Kühlmediumpumpe 7 gleichzeitig der Antriebsmotor 2 des Fahrzeugs, so genügt es lediglich, die aktuelle Drehzahl des Antriebsmotors 2 zu erfassen. Bei Vorsehen eines der Kühlmediumpumpe 7 vorgeschalteten Getriebes (nicht dargestellt) kann zum Beispiel die aktuelle Übersetzungsstufe (Gang) beziehungsweise die Drehzahl der An-/Abtriebswelle des Getriebes mittels eines geeigneten Sensors erfasst und an die Steuereinrichtung 17 übertragen werden. Aus den erfassten Sensordaten lässt sich dann allgemein auf den Druck und Volumenstrom des Kühlmediums im Fahrzeugkühlkreislauf 1 (Förderstrom der Kühlmediumpumpe 7) und somit auf die hydraulische Leistung des Kühlmediums schließen.

Oft genügt es, die von wenigstens einem oder einer Vielzahl von Sensoren zu erfassenden Größen wie zum Beispiel die aktuelle Kühlmediumpumpendrehzahl und die Stellung des Thermostats 10 als Parameter direkt im Kennfeld zu hinterlegen. Mittels dieses Kennfeldes wird dann der einzustellende Steuerdruck in Abhängigkeit des eingestellten Retarderbremsmomentes, der aktuell vorliegenden Primärschaufelraddrehzahl und der von dem wenigstens einen Sensor erfassten Größe aus dem Kennfeld herausgelesen und anschließend eingestellt.

Das Kennfeld umfasst somit neben den bereits vorhandenen Größen Retarderbremsmoment und Primärschaufelraddrehzahl wenigstens eine weitere oben beschriebene zur hydraulischen Leistung des Kühlmediums im Kreislauf korrelierende Größe - auch in Kombination -, wie zum Beispiel die Drehzahl, der Fördervolumenstrom oder der Druck auf einer Saug- oder Druckseite der Kühlmediumpumpe 7 und/oder die aktuelle Stellung von, insbesondere aller (verstellbaren) hydraulischer Einbauten im Kühlkreislauf 1, wobei die Größe insbesondere direkt im Kennfeld hinterlegt ist, so dass der Steuerdruck zusätzlich in Abhängigkeit dieser und damit in Abhängigkeit der augenblicklichen hydraulischen Leistung des Kühlmediums, eingestellt wird.

### Bezugszeichenliste

- 1: Fahrzeugkühlkreislauf
- 2: Antriebsmotor
- 3: hydrodynamischer Retarder
- 4: Primärschaufelrad
- 5: Sekundärschaufelrad
- 6: Arbeitsraum
- 7: Kühlmediumpumpe
- 8, 9: Ventil
- 10: Thermostat
- 11: Nebenabtriebswelle
- 12: Antriebsräder
- 13: Antriebswelle
- 14: Getriebe
- 15: Wärmetauscher
- 16: Ausgleichsbehälter
- 17: Steuereinrichtung
- 18: Antriebswelle

## Patentansprüche

1. Verfahren zum Steuern der Leistungsübertragung eines in einem Fahrzeugkühlkreislauf (1), in dem ein Kühlmedium zum Kühlen eines Antriebsmotors (2) und/oder von anderen Aggregaten umgewälzt wird, angeordneten hydrodynamischen Retarders (3), umfassend
1.1 ein angetriebenes Primärschaufelrad (4) und ein Sekundärschaufelrad (5), die miteinander einen torusförmigen, wahlweise mit Arbeitsmedium befüllbaren und entleerbaren Arbeitsraum (6) ausbilden, um Drehmoment hydrodynamisch vom Primärschaufelrad (4) auf das Sekundärschaufelrad (5) zu übertragen; wobei
1.2 das Kühlmedium des Fahrzeugkühlkreislaufs (1) zugleich das Arbeitsmedium des hydrodynamischen Retarders (3) ist; und
1.3 für den hydrodynamischen Retarder (3) ein Kennfeld hinterlegt ist, das der aktuell vorliegenden Primärschaufelraddrehzahl und einem, wenigstens eine Bremsstufe darstellenden, einzustellenden Retarderbremsmoment einen Steuerdruck zum Einstellen eines Füllungsgrades im Arbeitsraum (6) zuordnet;
mit den folgenden Schritten:
1.4 Einstellen des einzustellenden Retarderbremsmomentes in Abhängigkeit der Primärschaufelraddrehzahl durch Erzeugen des zugeordneten Steuerdruckes;
1.5 zum Einstellen des Steuerdruckes wird zusätzlich die aktuelle hydraulische Leistung des Kühlmediums an wenigstens einer Stelle im Fahrzeugkühlkreislauf direkt erfasst, oder
1.6 die hydraulische Leistung wird mittels einer oder mehrerer der nachfolgenden Größen indirekt erfasst:
- der Drehzahl, der Förder- oder Antriebsleistung, dem Fördervolumenstrom, oder dem Druck auf einer Saug- oder Druckseite einer im Fahrzeugkühlkreisläuf (1) angeordneten Kühlmediumpumpe (7), mittels der das Kühlmedium umgewälzt wird;
- der aktuellen Drehzahl eines die Kühlmediumpumpe (7) antreibenden Antriebsmotors und/oder bei Vorsehen eines der Kühlmediumpumpe (7) vorgeschalteten Getriebes, der aktuellen Drehzahl des Antriebsmotors zusammen mit der aktuellen Übersetzungsstufe des Getriebes;
- dem aktuellen Kühlmediumdruck im Fahrzeugkühlkreislauf (1), der Schaltstellung wenigstens eines Ventils (8, 9), eines Thermostats (10) oder sonstiger hydraulischer Einbauten;
1.7 wobei die hydraulische Leistung oder die Größe zur indirekten Erfassung der hydraulischen Leistung zusätzlich im Kennfeld hinterlegt ist.

2. Verfahren gemäß Anspruch 1, **dadurch gekennzeichnet, dass** der Kühlmediumdruck indirekt aus der Kühlmediumtemperatur bestimmt wird.

## Claims

1. A method for controlling the power transmission of a hydrodynamic retarder (3) arranged in a vehicle cooling circuit (1) in which a cooling medium for cooling a drive motor (2) and/or other assemblies is circulated, comprising
1.1 a driven primary blade wheel (4) and a secondary blade wheel (5), which jointly form a toroidal working chamber (6) which can selectively be filled with working medium or from which such working medium can be discharged in order to transmit torque hydrodynamically from the primary blade wheel (4) to the secondary blade wheel (5);
1.2 with the cooling medium of the vehicle cooling circuit (1) simultaneously being the working medium of the hydrodynamic retarder (3), and
1.3 a characteristic map is stored for the hydrodynamic retarder (3) which allocates a control pressure for setting a filling level in the working chamber (6) to the currently provided primary blade wheel speed and to a retarder braking torque that is to be set, which torque represents at least one braking stage, comprising the following steps:
1.4 the retarder braking torque to be set is set depending on the primary blade wheel speed by generating the allocated control pressure;
1.5 in order to set the control pressure, the current hydraulic power of the cooling medium is additionally detected directly in at least one location in the vehicle cooling circuit, or
1.6 the hydraulic power is detected indirectly by means of one or more of the following quantities:
- the rotational speed, the conveying or drive power, the conveying volume flow or the pressure on a suction or pressure side of a cooling medium pump (7) arranged in the vehicle cooling circuit (1) by means of which the cooling medium is circulated;
- the current rotational speed of a drive motor driving the cooling medium pump (7) and/or, if a transmission is provided upstream of the cooling medium pump (7), the current speed of the drive motor together with the current speed step of the transmission;
- the current cooling medium pressure in the vehicle cooling circuit (1), the switching position of at least one valve (8, 9), a thermostat (10) or other hydraulic components;
1.7 with the hydraulic power or the quantity for indirect detection of the hydraulic power being additionally stored in the characteristic map.

2. A method according to claim 1, **characterized in that** the cooling medium pressure is determined indirectly from the cooling medium temperature.

## Revendications

1. Procédé de commande de la transmission de puissance d'un retardateur hydrodynamique (3) disposé dans un circuit de refroidissement de véhicule (1), dans lequel un fluide de refroidissement est mis en circulation permettant de refroidir un moteur d'entraînement (2) et/ou d'autres groupes, comprenant
1.1 une roue à aubes primaire entraînée (4) et une roue à aubes secondaire (5), qui forment ensemble une chambre de travail (6) toroïdale pouvant être remplie sélectivement d'un fluide de travail et pouvant être vidé de celui-ci, pour transmettre un couple de rotation de manière hydrodynamique de la roue à aubes primaire (4) à la roue à aubes secondaire (5); où
1.2 le fluide de refroidissement du circuit de refroidissement de véhicule (1) est en même temps le fluide de travail du retardateur hydrodynamique (3); et
1.3 un champ caractéristique est mémorisé pour le retardateur hydrodynamique (3), qui associe une pression de commande pour définir un degré de remplissage dans la chambre de travail (6) à la vitesse de rotation de la roue à aubes primaire effectivement en présence et à un couple de freinage de retardateur à régler, représentant au moins une étape de freinage;
comprenant les étapes suivantes:
1.4 réglage du couple de freinage de retardateur à régler en fonction de la vitesse de rotation de la roue à aubes primaire en créant la pression de commande associée;
1.5 la puissance hydraulique courante du fluide de refroidissement est déterminée directement au moins en un point du circuit de refroidissement de véhicule pour régler la pression de commande, ou bien
1.6 la puissance hydraulique est déterminée indirectement à l'aide d'une ou de plusieurs des variables suivantes:
- la vitesse de rotation, la puissance d'alimentation ou d'entraînement, le débit volumique d'alimentation ou bien la pression sur le côté aspiration ou le côté pression d'une pompe à fluide de refroidissement (7) disposée dans le circuit de refroidissement de véhicule (1), pompe à l'aide de laquelle le fluide de refroidissement est mis en circulation;
- la vitesse de rotation courante d'un moteur d'entraînement entraînant la pompe à fluide de refroidissement (7) et/ou en présence d'une transmission disposée en amont de la pompe à fluide de refroidissement (7), la vitesse de rotation courante du moteur d'entraînement en même temps que l'étage de démultiplication courant de la transmission;
- la pression de fluide de refroidissement courante dans le circuit de refroidissement de véhicule (1), la position de commande au moins d'une soupape (8, 9), d'un thermostat (10) ou d'autres installations hydrauliques;
1.7 où la puissance hydraulique ou la variable est mémorisée en outre dans le champ caractéristique pour la détection indirecte de la puissance hydraulique.

2. Procédé selon la revendication 1, **caractérisé en ce que** la pression du fluide de refroidissement est définie indirectement à partir de la température du fluide de refroidissement.
